# EUROPEAN PATENT SPECIFICATION

(11) **EP 2 828 033 B1**
(45) Date of publication and mention of the grant of the patent: **08.03.2017**
(21) Application number: 13711057.3
(22) Date of filing: 21.03.2013
(51) Int. Cl.: B23K 37/047, H02K 15/02

(54) **METHOD FOR MANUFACTURING A ROTOR**
VERFAHREN ZUR HERSTELLUNG EINES ROTORS
PROCÉDÉ DE FABRICATION D'UN ROTOR

(30) Priority: 24.03.2012 EP 12161145
(43) Date of publication of application: 28.01.2015
(73) Proprietor: General Electric Technology GmbH, 5400 Baden (CH)
(72) Inventor: IRWANTO, Bartolomeus, CH-5200 Brugg (CH); ECKERT, Lothar, CH-5245 Habsburg (CH); ROTZINGER, Ralf, 79730 Murg-Niederhof (DE)
(74) Representative: General Electric Technology GmbH
(86) International application number: PCT/EP2013/055982
(87) International publication number: WO 2013/143973

(56) References cited:
- DE-A1- 2 324 388
- US-A- 4 086 690
- US-A1- 2010 281 688

## Description

The present disclosure relates to a method for manufacturing a rotor.

In particular the rotor is a rotor of an electric machine such as a turbogenerator (i.e. a synchronous generator to be connected to a gas or steam turbine) or a hydro generator (i.e. a synchronous generator to be connected to a hydro turbine) or an asynchronous generator or a synchronous or asynchronous generator; it is anyhow clear that the same method can also be used to manufacture rotor of other rotating electric machines such as motors.

In order to manufacture rotors of rotating electric machines, it is known to weld a plurality of elements together.

In this respect, the elements are usually vertically stacked, then they are partially welded to connect all the elements together forming a pile, then the pile is brought in an horizontal configuration and the elements are completely welded forming the rotors.

Since during welding or brazing the conditions of the elements and pile can change, the quality of the welds can also change.

For example, conditions of the elements and pile can include the stress on the welds, the deformation of the pile, the stiffness of the pile, etc.; these factors can influence the quality of the welds, such as for example dimensions of the welds (and thus tolerances of the rotor) and strength of the welds (and thus strength of the rotor).

US 2010281688 A1 describes a process for producing a rotor which is made by welding together disk-shaped and/or drum-shaped elements. The disks are stacked axially in the vertical direction. A first welding process takes place in a vertical direction of the stacked disks, followed by a second welding process in a horizontal orientation of the stacked disks. Further, this document describes a stress annealing process in an annealing furnace. To the end of avoiding stress in the material the annealing process is performed in a slow and controlled manner in terms of temperature ranges.

An aspect of the disclosure thus includes providing a method by which the quality of the welds can be improved.

These and further aspects are attained by providing a method in accordance with the accompanying claims.

Further characteristics and advantages will be more apparent from the description of a preferred but non-exclusive embodiment of the method, illustrated by way of non-limiting example in the accompanying drawings, in which:
Figures 1 through 3 are views of a pile in a vertical configuration;
Figures 4-5 are views of a pile in the horizontal configuration;
Figure 6 shows a rotor in the horizontal configuration;

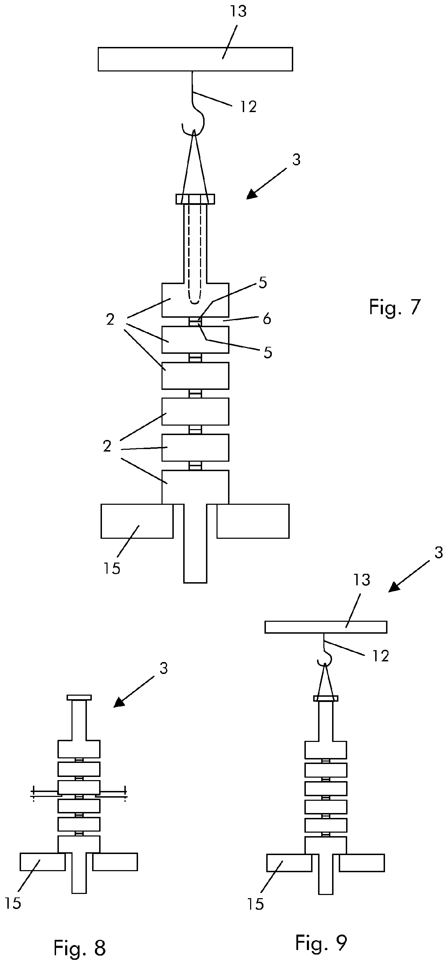

Figures 7 though 9 show alternative ways for vertically supporting the rotor; and
Figures 10 though 18 show alternative ways for horizontally supporting the rotor.

### DETAILED DESCRIPTION OF EXEMPLARY EMBODIMENTS

The method for manufacturing a rotor 1 by welding or brazing a plurality of elements 2 together comprises vertically stacking the elements 2 to form a pile 3.

Preferably the elements are provided with protruding collars 5 that let gaps 6 between adjacent elements 2 be defined (in these gaps 6 the welds are realised). In addition these collars 5 help centering of adjacent elements 2 one with respect to the other.

Then adjacent elements 2 are partially welded or brazed (arrow F1) with the pile 3 in the vertical configuration.

This can be done by melting the collars 5 and eventually also adding material into the gaps 6, without completely filling the gaps 6. For example during this step a welding or brazing torch is used and the pile 3 is rotated about its axis 7.

At the end of this step, the adjacent elements 2 are connected through semi welds 8.

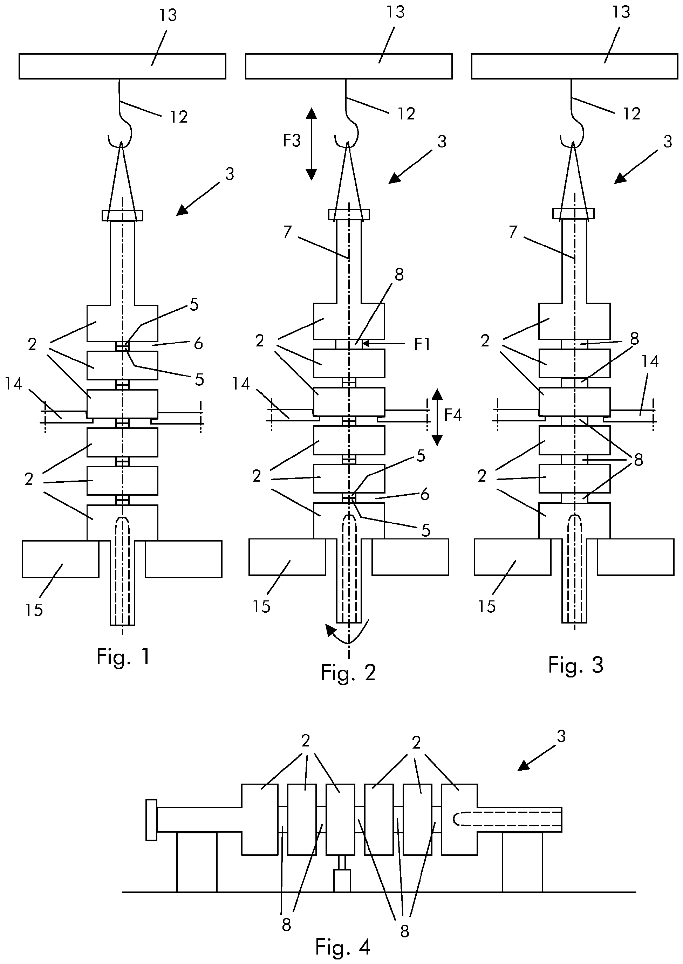

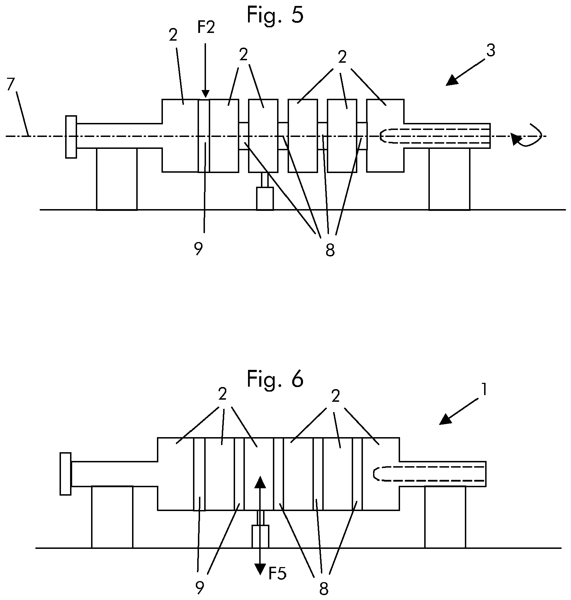

Then the pile 3 is brought into a horizontal configuration (figure 4) and the adjacent elements 2 are completely welded or brazed (figure 5, arrow F2).

Also in this case, a welding or brazing torch can be used and the pile 3 can be rotated about its axis 7.

At the end of this step, the adjacent elements 2 are connected through welds 9 to define a rotor 1 (figure 6).

Advantageously, parameters indicative of the stress and/or deformation of the pile 3 are defined before welding or brazing.

When the pile 3 is in the vertical configuration these parameters can include the pressure on the collars 5 (for example the pressure on each collar 5) and/or the deformation of the collars 5 (for example the compression of each collar 5) and/or the radial ran out of the elements 2 with respect to the axis 7; other examples for the parameters are anyhow possible.

When the pile 3 is in the horizontal configuration, the parameters can be the deformation of the pile 3 (at each semi weld 8) and/or the stress on the pile 3 (at each semi weld 8 or at particular positions of one or more elements 2) and/or the relative distance between adjacent elements 2. Also in this case other examples for the parameters are possible.

Thus, a desired parameter value or range during welding or brazing of selected adjacent elements with the pile in the vertical and/or horizontal configuration is provided.

In other words a value or a range for the parameter relative to each semi weld 8 or weld 9 is provided, such that the actual parameter when each of the semi weld 8 or weld 9 is realised is at the given value or within the given range.

Then, during welding or brazing, the pile 3 is supported to maintain the parameter at the desired parameter value or within the desired parameter range.

For example, when the semi welds 8 or welds 9 are realised, the welding or brazing sequence (i.e. the order of realising each semi weld 8 and/or weld 9) can be defined and the support conditions can be calculated, which permit the parameters have the desired parameter values or stay within the desired parameter ranges for each welding or brazing (because when each semi weld 8 or weld 9 is realised the features of the pile can change).

The support conditions are then adjusted to those calculated support conditions for each welding or brazing.

Alternatively, the parameter between the selected adjacent elements can be measured and the pile 3 can be supported such that the parameters have the desired parameter values or stay within the desired parameter range.

Preferably, in the cases above the support conditions are adjusted before each welding or brazing.

In particular, when the pile 3 is in the vertical configuration, adjacent elements at the upper part of the pile 3 are welded or brazed before adjacent elements 2 at the bottom part of the pile 3.

Preferably, at least an element at the top of the pile 3 is supported when the pile 3 is in the vertical configuration.

In this case supporting of the element at the top of the pile is preferably adjustable (F3).

For example, this can be done by supporting the top element 2 with a hook 12 whose position can be regulated; in this respect the hook 12 can be connected to a crane 13.

In addition, when the pile 3 is in the vertical configuration, also an element 2 at an intermediate position of the pile 3 and/or an element 2 at the bottom of the pile 3 can be supported (respectively via supports 14 and/or 15).

For example the support 14 for an intermediate element 2 can include shoulders that hold the intermediate element 2.

In case the pile 3 is supported also at an intermediate position of the pile 3, supporting at the intermediate position of the pile 3 is preferably adjustable (preferably in a vertical direction, F4).

The support 15 at the bottom of the pile 3 can include a turnable table.

In this way, by supporting the pile 3 at the top and/or at an intermediate position and/or at the bottom of the pile 3, and for example by welding or brazing the elements 2 at the top of the pile 3 before the elements 2 at the bottom of the pile 3, the pressure on and/or deformation of each semi weld 8 (during welding or brazing) can be regulated to be maintained at the desired value or within the desired range.

Then while the welds 9 are realised and the pile 3 is in the horizontal configuration, the pile 3 with the partially welded or brazed elements 2 is supported at two, three or more positions.

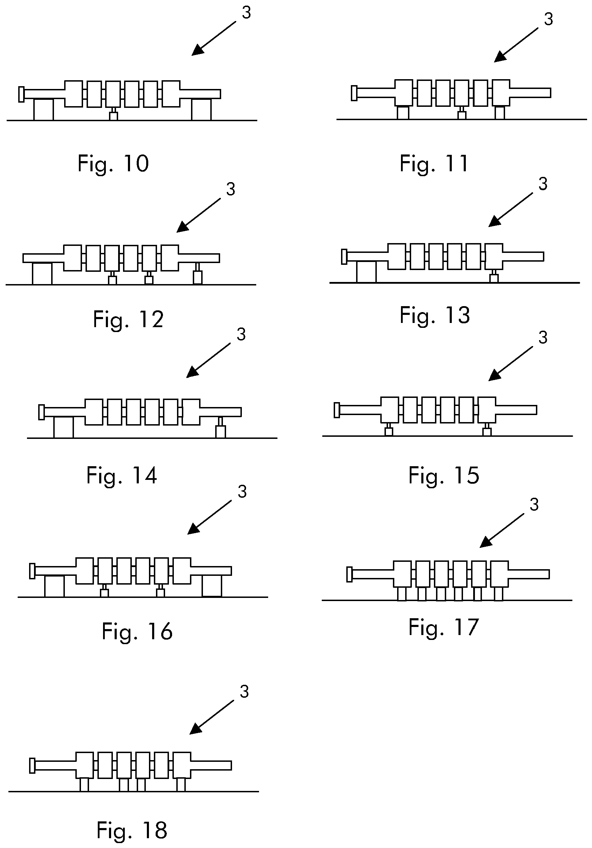

For example a number of elements 2 or all of the elements 2 can be supported by rigid (i.e. non-adjustable) supports, such that the parameter does not substantially change because of the welding or brazing (figures 17, 18).

Anyhow, preferably, supporting at at least one of the positions is adjustable (arrow F5), but also two, three or more (also all supports) can be adjustable.

Preferably the supporting at the intermediate position is adjustable. The adjustable support can be a hydraulic or oil or spring or pre-loaded spring or air support.

### EXAMPLE

In the following an example is described. The features described in the following can be implemented independently from one another.

The elements 2 are stacked in the vertical configuration on the turnable table 15 forming the pile 3. Then the hook 12 (for example it is a rotatable hook) connected to the crane 13 is connected to the top element 2 of the pile 3. Thus the first semi welds 8 are realised; for example the semi welds 8 are realised starting from the top of the pile 3. After the first semi weld 8, the hook position (for example its height) is adjusted and the second semi weld 8 is realised; the procedure is repeated until all the semi welds 8 are realised.

Then the pile is tilted in the horizontal configuration; for example the pile 3 is supported by three supports and the intermediate support is adjustable; anyhow the number of supports can be any such as two or more than three.

The intermediate support is regulated for the pile 3 having only semi welds 8 (i.e. no welds 9); a first weld 9 is thus realised. Then the intermediate support is regulated according to the actual configuration of the pile 3 (with one weld 9 and semi welds 8) and a second weld 9 is realised. The process is repeated until all the welds are realised.

Since the semi welds 8 and weld 9 are realised under controlled stress and/or deformation conditions, the quality (in term of strength and tolerance) is high.

Naturally the features described may be independently provided from one another.

In practice the materials used and the dimensions can be chosen at will according to the requirements and to the state of the art.

### REFERENCE NUMBERS

- 1: rotor
- 2: element
- 3: pile
- 5: collar
- 6: gap
- 7: axis of the rotor
- 8: semi weld
- 9: weld
- 12: hook
- 13: crane
- 14: support
- 15: turnable table
- F1: part welding or brazing
- F2: complete welding or brazing
- F3: adjusting direction of the hook 12
- F4: adjusting direction of the support 14
- F5: adjusting with pile in horizontal configuration

## Claims

1. Method for manufacturing a rotor (1) by welding or brazing a plurality of elements (2) together, the method comprising
vertically staking the elements (2) to form a pile (3),
partially welding or brazing adjacent elements (2) with the pile (3) in the vertical configuration, bringing the pile (3) to an horizontal configuration, completely welding or brazing adjacent elements (2) with the pile (3) in the horizontal configuration, **characterised by**
defining, before welding or brazing, at least one parameter indicative of at least the stress and/or deformation of the pile (3),
providing a desired value or range of this parameter which is realised during welding or brazing of selected adjacent elements with the pile (3) in the vertical and/or horizontal configuration,
supporting the pile (3) to maintain the parameter at the desired parameter value or within the desired parameter range,
defining the welding or brazing sequence,
calculating the support conditions that permit the parameters have the desired parameter values or stay within the desired parameter ranges for each welding or brazing, and
adjusting the support conditions to the calculated support conditions for each welding or brazing.

2. The method according to claim 1, **characterised by** measuring the parameter between the selected adjacent elements (2), and supporting the pile (3) such that the parameters have the desired parameter values or stay within the desired parameter ranges.

3. The method according to claim 1, **characterised by** welding or brazing adjacent elements (2) at the upper part of the pile (3) before the adjacent elements (2) at the bottom part of the pile (3) when the pile (3) is in the vertical configuration.

4. The method according to claim 1, **characterised by** supporting at least an element (2) at the top of the pile (3) when the pile (3) is in the vertical configuration.

5. The method according to claim 4, **characterised in that** supporting the element (2) at the top of the pile (3) is adjustable.

6. The method according to claim 1, **characterised by** supporting at least an element (2) at an intermediate position of the pile (3) when the pile (3) is in the vertical configuration.

7. The method according to claim 6, **characterised in that** supporting the element (2) at an intermediate position of the pile (3) is adjustable.

8. The method according to claim 1, **characterised by** supporting an element (2) at the bottom of the pile (3).

9. The method according to claim 1, **characterised by** supporting the partially welded or brazed elements (2) at at least three positions when they are in the horizontal configuration.

10. The method according to claim 1, **characterised in that** supporting at at least one position is adjustable.

11. The method according to claim 9 and 10, **characterised in that** supporting at an intermediate position of the at least three positions is adjustable.

## Patentansprüche

1. Verfahren zum Herstellen eines Rotors (1) durch Schweißen oder Hartlöten mehrerer Elemente (2) aneinander, wobei das Verfahren Folgendes umfasst:
vertikales Einsetzen der Elemente (2), um einen Stapel (3) zu bilden,
teilweises Schweißen oder Hartlöten benachbarter Elemente (2) mit dem Stapel (3) in der vertikalen Konfiguration,
Bringen des Stapels (3) in eine horizontale Konfiguration,
vollständiges Schweißen oder Hartlöten benachbarter Elemente (2) mit dem Stapel (3) in der horizontalen Konfiguration, **gekennzeichnet durch**:
Definieren mindestens eines Parameters, der mindestens auf die Belastung und/oder die Verformung des Stapels (3) hinweist, vor dem Schweißen oder Hartlöten,
Bereitstellen eines gewünschten Werts oder Bereichs dieses Parameters, der während des Schweißens oder Hartlötens der ausgewählten benachbarten Elemente mit dem Stapel (3) in der vertikalen und/oder der horizontalen Konfiguration verwirklicht wird,
Tragen des Stapels (3), um den Parameter bei dem gewünschten Parameterwert oder innerhalb des gewünschten Parameterbereichs zu halten,
Definieren der Schweißfolge oder der Hartlötfolge,
Berechnen der Tragebedingungen, die erlauben, dass die Parameter für jedes Schweißen oder Hartlöten die gewünschten Parameterwerte besitzen oder innerhalb der gewünschten Parameterbereiche bleiben, und
Einstellen der Tragebedingungen auf die berechneten Tragebedingungen für jedes Schweißen oder Hartlöten.

2. Verfahren nach Anspruch 1, **gekennzeichnet durch** das Messen des Parameters zwischen den ausgewählten benachbarten Elementen (2) und das Tragen des Stapels (3) so, dass die Parameter die gewünschten Parameterwerte besitzen oder innerhalb der gewünschten Parameterbereiche bleiben.

3. Verfahren nach Anspruch 1, **gekennzeichnet durch** das Schweißen oder Hartlöten benachbarter Elemente (2) an dem oberen Teil des Stapels (3) vor den benachbarten Elementen (2) an dem unteren Teil des Stapels (3), wenn sich der Stapel (3) in der vertikalen Konfiguration befindet.

4. Verfahren nach Anspruch 1, **gekennzeichnet durch** das Tragen mindestens eines Elements (2) an dem Kopfende des Stapels (3), wenn der Stapel (3) sich in der vertikalen Konfiguration befindet.

5. Verfahren nach Anspruch 4, **dadurch gekennzeichnet, dass** das Tragen des Elements (2) an dem Kopfende des Stapels (3) eingestellt werden kann.

6. Verfahren nach Anspruch 1, **gekennzeichnet durch** das Tragen mindestens eines Elements (2) an einer Zwischenposition des Stapels (3), wenn der Stapel (3) sich in der vertikalen Konfiguration befindet.

7. Verfahren nach Anspruch 6, **dadurch gekennzeichnet, dass** das Tragen des Elements (2) an einer Zwischenposition des Stapels (3) eingestellt werden kann.

8. Verfahren nach Anspruch 1, **gekennzeichnet durch** das Tragen eines Elements (2) an dem unteren Ende des Stapels (3).

9. Verfahren nach Anspruch 1, **gekennzeichnet durch** das Tragen der teilweise geschweißten oder hartgelöteten Elemente (2) an mindestens drei Positionen, wenn sie sich in der horizontalen Konfiguration befinden.

10. Verfahren nach Anspruch 1, **dadurch gekennzeichnet, dass** das Tragen an mindestens einer Position eingestellt werden kann.

11. Verfahren nach Anspruch 9 und 10, **dadurch gekennzeichnet, dass** das Tragen an einer Zwischenposition der mindestens drei Positionen eingestellt werden kann.

## Revendications

1. Procédé pour fabriquer un rotor (1) en soudant ou en brasant une pluralité d'éléments (2) les uns aux autres, le procédé comprenant les étapes suivantes:
empiler verticalement les éléments (2) de manière à former une pile (3),
souder ou braser partiellement des éléments adjacents (2) avec la pile dans la configuration verticale,
amener la pile (3) dans une configuration horizontale,
souder ou brase complètement des éléments adjacents (2) avec la pile dans la configuration horizontale,
**caractérisé par** les étapes suivantes:
définir, avant le soudage ou le brasage, au moins un paramètre indicatif d'au moins la contrainte et/ou la déformation de la pile (3),
déterminer une valeur ou une plage souhaitée de ce paramètre qui est appliquée pendant le soudage ou le brasage d'éléments adjacents sélectionnés avec la pile dans la configuration verticale et/ou horizontale,
supporter la pile (3) de manière à maintenir le paramètre à la valeur de paramètre souhaitée ou à l'intérieur de la plage de paramètre souhaitée,
définir la séquence de soudage ou de brasage,
calculer les conditions de support qui permettent aux paramètres d'afficher les valeurs de paramètre souhaitées ou de rester à l'intérieur des plages de paramètre souhaitées pour chaque soudage ou brasage, et
régler les conditions de support sur les conditions de support calculées pour chaque soudage ou brasage.

2. Procédé selon la revendication 1, **caractérisé par** la mesure du paramètre entre les éléments adjacents sélectionnés (2), et le support de la pile (3) de telle sorte les paramètres affichent les valeurs de paramètre souhaitées ou restent à l'intérieur des plages de paramètre souhaitées.

3. Procédé selon la revendication 1, **caractérisé par** le soudage ou le brasage d'éléments adjacents (2) à la partie supérieure de la pile (3) avant les éléments adjacents (2) à la partie inférieure de la pile (3) lorsque la pile (3) se trouve dans la configuration verticale.

4. Procédé selon la revendication 1, **caractérisé par** le support d'au moins un élément (2) au sommet de la pile (3) lorsque la pile (3) se trouve dans la configuration verticale.

5. Procédé selon la revendication 4, **caractérisé en ce que** l'élément (2) au sommet de la pile (3) est réglable.

6. Procédé selon la revendication 1, **caractérisé par** le support d'au moins un élément (2) à une position intermédiaire de la pile (3) lorsque la pile (3) se trouve dans la configuration verticale.

7. Procédé selon la revendication 6 **caractérisé en ce que** le support de l'élément (2) à une position intermédiaire de la pile (3) est réglable.

8. Procédé selon la revendication 1, **caractérisé par** le support d'un élément (2) au pied de la pile (3).

9. Procédé selon la revendication 1, **caractérisé par** le support des éléments partiellement soudés ou brasés (2) à au moins trois positions lorsqu'ils se trouvent dans la configuration horizontale.

10. Procédé selon la revendication 1, **caractérisé en ce que** le support à au moins une position est réglable.

11. Procédé selon les revendications 9 et 10, **caractérisé en ce que** le support à une position intermédiaire desdites au moins trois positions est réglable.
